# EUROPEAN PATENT SPECIFICATION

(11) **EP 3 636 416 B1**
(45) Date of publication and mention of the grant of the patent: **18.09.2024**
(21) Application number: 18199717.2
(22) Date of filing: 10.10.2018
(51) Int. Cl.: B29C 64/214, B29C 64/153, B22F 10/28, B33Y 10/00, B33Y 30/00

(54) **APPARATUS COMPRISING AN ADAPTIVE RECOATER BLADE FOR A 3D PRINTER**
VORRICHTUNG MIT EINER ANPASSBAREN BESCHICHTERKLINGE FÜR EINEN 3D-DRUCKER
APPAREIL AVEC UNE LAME DE RECOUVREMENT ADAPTABLE POUR UNE IMPRIMANTE 3D

(43) Date of publication of application: 15.04.2020
(73) Proprietor: Concept Laser GmbH, 96215 Lichtenfels (DE)
(72) Inventor: Schmidbauer, Christoph, 96465 Neustadt bei Coburg (DE); Wohlfarth, Dagmar, 96215 Lichtenfels (DE); Diller, Christian, 96215 Lichtenfels (DE); Hiemann, Denise, 96215 Lichtenfels (DE); Petratschek, André, 96224 Burgkunstadt (DE)
(74) Representative: Hafner & Kohl PartmbB

(56) References cited:
- EP-A1- 3 263 300
- WO-A1-2018/054727
- CN-A- 105 397 089
- US-A- 4 241 691
- US-A1- 2017 136 695
- US-A1- 2018 200 791

## Description

The invention relates to an apparatus for additively manufacturing three-dimensional objects comprising an application unit for applying, in particular powdery, build material in a build plane in a process chamber of said apparatus, which application unit comprises an application element carried by an application element carrier.

Application units for applying build material, in particular powdery build material, in a build plane of the process chamber of apparatuses for additively manufacturing three-dimensional objects are generally known from prior art.

At least in powder bed based additive manufacturing processes, i.e. processes in which material is layerwise applied in a powder bed and selectively consolidated to form the three-dimensional object, application units are used to layerwise apply the build material. Known application units usually comprise an application element that is carried by an application element carrier, e.g. fixedly mounted on a frame-like structure. The application element may, inter alia, be built as a blade or a rake or the like that is adapted to convey build material and distribute the build material in the build plane.

For example, it is possible to use the application unit to convey build material from a dose plane in which the build material is provided to a build plane in which the build material is (evenly) distributed in advance to a consolidation process. Further, it is known from prior art that different application elements, in particular application elements built from different materials can be used dependent on the additive manufacturing process, e.g. dependent on the type of build material that is used. Inter alia, it is possible to use steel tools or flexible rubber profiles or carbon brushes dependent on the additive manufacturing process. However, the different application elements may lead to negative impacts on the additive manufacturing process.

For example, it is possible that fragments of carbon brushes or even complete carbon bristles are removed from the application element during an application process. Further, small parts of rubber from a rubber profile used as application element can be removed during an application process step that may contaminate the build material. On the other side, rigid tools, such as steel tools may apply pressure on a region of the object that protrudes the actual layer of build material leading to a contact between the application element and the object that may cause damage to the object and the application element, e.g. in damage to a filigree portion of the object.

Application units with application elements are known from the documents EP 3 263 300 A1, US 2018 200 791 A1, WO 2018 054 727 A1, CN 105 397 089 A and US 2017 136 695 A1. Further, from the document US 4 241 691 a doctor blade holder that is adapted to accommodate a doctor blade in a slot in the holder and is provided with a resilient means at the base of the slot is known.

It is an object of the present invention to provide an improved application unit, wherein in particular negative influences on the additive manufacturing process are reduced or avoided.

The object is inventively achieved by an apparatus according to claim 1 and a method according to claim 7.

Advantageous embodiments of the invention are subject to the dependent claims.

The application unit described herein is an application unit for an apparatus for additively manufacturing three-dimensional objects, e.g. technical components, by means of successive selective layerwise consolidation of layers of a powdered build material ("build material") which can be consolidated by means of an energy source, e.g. an energy beam, in particular a laser beam or an electron beam. A respective build material can be a metal, ceramic or polymer powder. A respective energy beam can be a laser beam or an electron beam. A respective apparatus can be an apparatus in which an application of build material and a consolidation of build material is performed separately, such as a selective laser sintering apparatus, a selective laser melting apparatus or a selective electron beam melting apparatus, for instance. Alternatively, the successive layerwise selective consolidation of build material may be performed via at least one binding material. The binding material may be applied with a corresponding application unit and, for example, irradiated with a suitable energy source, e.g. a UV light source.

The apparatus may comprise a number of functional units which are used during its operation. Exemplary functional units are a process chamber, an irradiation device which is adapted to selectively irradiate a build material layer disposed in the process chamber with at least one energy beam, and a stream generating device which is adapted to generate a gaseous fluid stream at least partly streaming through the process chamber with given streaming properties, e.g. a given streaming profile, streaming velocity, etc. The gaseous fluid stream is capable of being charged with non-consolidated particulate build material, particularly smoke or smoke residues generated during operation of the apparatus, while streaming through the process chamber. The gaseous fluid stream is typically inert, i.e. typically a stream of an inert gas, e.g. argon, nitrogen, carbon dioxide, etc.

As described before, the apparatus of claim 1 comprises an application unit for applying build material in a build plane of said apparatus, wherein the application unit comprises an application element carried by an application element carrier. Typically, the application element is used for conveying or distributing the build material in the build plane. Hence, the application unit moves the build material thereby, transmitting or applying a force on the build material to distribute the build material (evenly) in the build plane, wherein the application element protrudes from the application element carrier towards the build plane. The invention is based on the idea that the application element is coupled to the application element carrier via at least one deflection unit.

The deflection unit allows for deflecting the application element relative to the application element carrier, i.e. generating a relative movement between the application element and the application element carrier. Thus, dependent on the force that is applied on the application element, the application element can be moved relative to the application element carrier. Hence, it is ensured that the application element does not negatively influence the additive manufacturing process, e.g. by applying a force on the object that is above a defined threshold value that would lead to a damage of filigree parts of the object. For example, if the application element comes in contact with the object, the application element may deflect, i.e. move relative to the application element carrier, thereby reducing the force that is applied on the object. Therefore, it is possible to avoid excessive forces on the build material, the application element and the object.

Hence, it is possible to use a solid or rigid material for the application element, such as steel, for instance, wherein the wear of the application element is significantly reduced and a cross-contamination with e.g. carbon bristles or rubber parts, i.e. foreign particles, is avoided. Thus, the tool life of the application element is significantly increased and the risk of contamination is reduced.

As recited in claim 1, the deflection unit comprises a spring element. The spring element is used to mount the application element to the application element carrier, e.g. mounting the spring element between the application element carrier and the application element. Dependent on the force acting on the application element, the spring element may, for example, be compressed, wherein the application element is moved relative to the application element carrier, in particular the application element is deflected with respect to the application element carrier. The spring element may be chosen dependent on the specific additive manufacturing process that is performed and in which the application element or the application unit, respectively, is used for applying build material. For example, different spring elements with different spring rates or build from different materials can be used, e.g. dependent on the type of build material or the structure of the object.

The spring element is built as or comprises a spring and/or an elastically deformable element. The spring element may, for example, be built as a coil spring or the spring element may comprise at least two coil springs via which the application element is mounted on the application element carrier. Thus, dependent on the force acting on the application element the one or more coil springs can be compressed to allow for a relative movement of the application element relative to the application element carrier. On the other hand, the deflection unit, in particular the spring element, may spring load the application element against the application element carrier.

It is also possible that the spring element may be built as or may comprise an elastically deformable element, such as a rubber element e.g. a rubber pad, via which the application element may be mounted on the application element carrier, in particular the elastically deformable element may be arranged between the application element and the application element carrier.

As described before, the application element is mounted to the application element carrier, wherein the deflection unit is arranged between the application element and the application element carrier. The application element is fastened against the application element carrier with the application unit acting as intermediate element. In other words, the application element may be mounted to the application element carrier, wherein the application element at least partially rests on the deflection unit. The deflection unit enables a movement of the application element relative to the application element carrier, e.g. in response to a force acting on the application element.

As recited in claim 1, the application element is mounted to the application element carrier via a positive locking connection between the application element and the application element carrier, wherein the application element is spring-loaded against the application element carrier, via the deflection unit. According to the invention, a positive locking connection is provided between the application element and the application element carrier. The deflection unit may load the application element against the application element carrier, wherein the deflection unit may be compressed or otherwise deformed under a force acting on the application element, e.g. an excessive force above a defined threshold value resulting from a part of the object protruding the plane on which build material has to be applied.

Hence, it is particularly preferred that the deflection unit is adapted to enable a deflection of the application element relative to the application element carrier), preferably for enabling at least one of
- compensating a defect in the build plane, in particular a part of the object protruding from the build plane or an unevenness in the build plane
- limiting a force acting on the application element
- reducing wear of the application element
- avoiding damaging the object.

Thus, when the application element is moved across the build plane to convey and distribute the build material, (excessive) forces can be compensated, as the application element may deflect relative to the application element carrier and therefore, may evade the part of the object, e.g. protruding a planar surface of the object. Therefore, if a contact between the application element and a part of the object occurs, the application element may deflect avoiding damage to the application element and/or the object.

In an embodiment of the invention, the deflection unit may be adapted to enable a deflection of the application element for a deflection height. Thus, it is possible that the application element may be deflected for a defined deflection height compared to an initial position (application position) in which the application element is moved across the build plane in an application process. Therefore, the deflection unit provides a defined movement space in which the application element may be moved relative to the application element carrier, e.g. under force acting between application element and build material or object.

As recited in claim 1, the application element comprises one surface inclined with respect to a build plane and/or the application element carrier. During an application process, the application element with the inclined surface is moved with the inclined surface facing in application direction. Hence, the application element may be moved more smoothly over irregularities in the build plane, such as a bump or an unevenness. The inclined surface facing the application direction changes the contact angle under which the application element comes in contact with the build material in that conveying the build material and distributing the build material is further improved.

Preferably, the application element may comprise a hull-shaped cross-section.

Thus, the cross-section of the application element may essentially be formed like the schematic hull of a ship with an inclined surface facing in application direction, for instance.

As described before, the application element may be built from different materials or comprise at least one portion build from a specific material, respectively. It is particularly preferred that the application element may comprise at least one portion build from a ceramic material and/or steel, preferably 1.2379 and/or 1.4301 and/or 1.4310, in particular a material related to the build material. Hence, the application element may be built from any arbitrary material, wherein, as described before, the application element may advantageously be built from a rigid material, as the deflection unit of the inventive application unit allows for a deflection, in particular a relative movement of the application element relative to the application element carrier. Thus, it is possible to use a rigid material, such as a ceramic or steel that allows for a long tool life and the possibility to precisely apply build material, as the application element itself does not deform during the application process.

It is particularly preferred that the application element is made from a material that is related to the build material, wherein preferably a new application element made from the same material that is used as build material is used in the additive manufacturing process. For example, if a metal powder is used as build material, the application element may be built from the same metal. Thus, a contamination of the build material with a different material can be avoided.

At least two of the application sub-elements that were described before can be built from the same material or from a different material. Thus, it is possible to choose the build material differently for the at least two different sub-elements, for example, if different regions of the build plane across which the application element is moved lead to a different wear behavior of the application element. For example, if a three-dimensional object is for the most part built in the center of the build plane, the central sub-elements of the application element can be built from a different material than application elements facing the edges of the build plane, for instance.

Further, the invention relates to a method for operating an apparatus for additively manufacturing three-dimensional objects by means of successive layerwise selective irradiation and consolidation of layers of a build material which can be consolidated by means of an energy source as recited in claim 7.

All features, details and advantages described with respect to the apparatus are fully transferable to the method.

Exemplary embodiments of the invention are described with reference to the Fig. The Fig. are schematic diagrams, wherein
- Fig. 1: shows an application unit not forming a part of the invention;
- Fig. 2: shows an inventive application unit according to an embodiment; and
- Fig. 3: shows an application element of an inventive application unit.

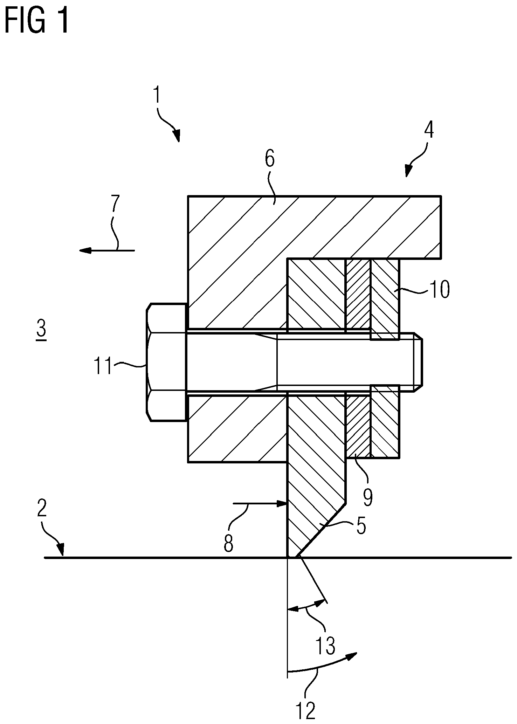

Fig. 1 shows an application unit 1, not forming part of the invention but useful to understand it, for applying, in particular powdery, build material in the build plane 2 in a process chamber 3 of an apparatus 4 for additively manufacturing three-dimensional objects. The application unit 1 comprises an application element 5 carried by an application element carrier 6. The application element 5, of course, protrudes from the application element carrier 6 in that the application element 5 can contact build material to convey and distribute build material. To apply build material the application element 5 is moved across the build plane 2 in an application direction 7 for layerwise applying build material in the build plane 2, in particular conveying and distributing the build material in the build plane 2.

In the application process forces act on the application element 5 as exemplarily indicated via arrow 8. The application element 5 is mounted to the application element carrier 6 via a deflection unit 9 which is in this example built as an elastically deformable element, e.g. a rubber element. Of course, any other flexible or deformable material can be used to build the deflection unit 9, for example a spring. To fasten the application element 5 to the application element carrier 6, the application element carrier 6 comprises a fastening means 10, e.g. a (threaded) metal plate, and a fastening element 11 e.g. a screw, via which the application element 5 can be fastened to the application element carrier 6. As can be derived from Fig. 1, the deflection unit 9 forms an intermediate element between the application element carrier 6 and the application element 5 allowing for a movement of the application element 5 relative to the application element carrier 6.

In other words, if the force that acts / that is applied on the application element 5 in the direction that is indicated via arrow 8, the application element 5 may deflect and move relative to the application element carrier 6 out of the initial position that is depicted in Fig. 1 (as indicated via arrow 12). Hence, the application element 5 may be deflected for a deflection angle 13 out of the initial position that is depicted in Fig. 1. Thus, the deflection unit 9 allows that the application element 5 may avoid a contact with the object or irregularities in the build plane 2. Hence, errors or irregularities in the build plane 2 can be compensated. Therefore, it is possible that a rigid application element 5 is used, e.g. an application element 5 made from ceramic or steel, wherein the tool life of the application element 5 is significantly increased compared to application elements made from rubber or carbon bristles or the like.

Advantageously, the application element 5 may be made from the same material, in particular metal, that is used as build material in the additive manufacturing process. Thus, a contamination of the build material with foreign material is avoided.

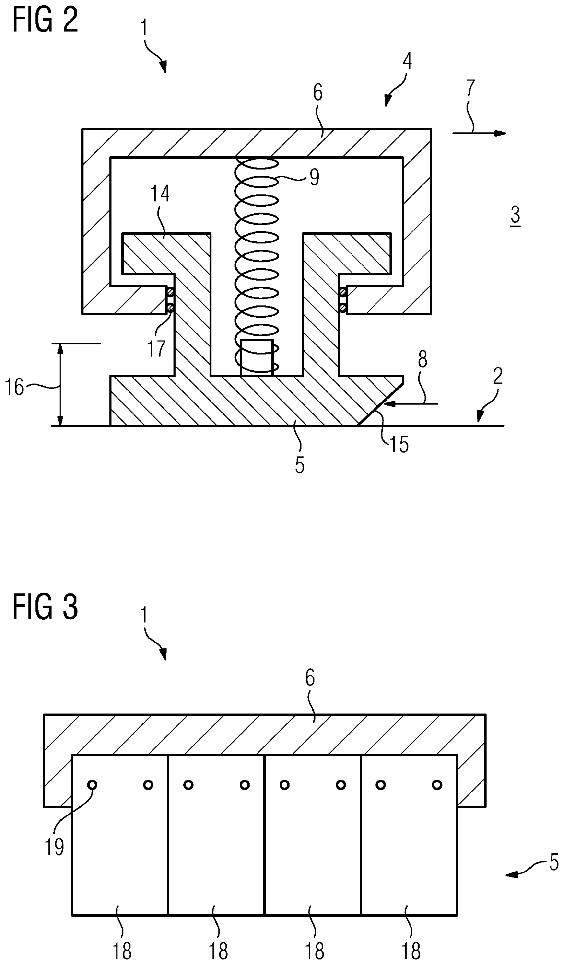

Fig. 2 shows an application unit 1 according to an embodiment of the invention. The application unit 1 also comprises an application element 5 mounted on an application element carrier 6 which application element 5 can be moved across the build plane 2 for applying build material in the build plane 2, as described before. The application unit 1 depicted in Fig. 2 comprises an application element 5 and an application element carrier 6 that provide a positive locking connection, e.g. via connecting means 14. In this example, the application element 5 is loaded against the application element carrier 6, in particular spring-loaded, via the deflection unit 9.

Thus, the application element 5 is spring-loaded against the application element carrier 6 in the direction of the build plane 2. In other words, forces acting on the application element 5 it during the additive manufacturing process, in particular an application process of build material, act on an inclined surface 15 that faces in application direction 7. Therefore, the application element 5 is moved relative to the application element carrier 6 which movement, in particular which lateral movement is enabled by the deflection element 9, which may be, inter alia, built as spring, in particular coil spring. In other words, the application element 5 maybe deflected out of the initial position that is depicted in Fig. 2 for a defined deflection height, as indicated via arrow 16.

Therefore, (excessive) forces acting on the application element 5 lead to a relative movement between the application element 5 and the application element carrier 6 by compressing the deflection unit 9 and moving the application element 5 into the application element carrier 6. To avoid build material from entering the application element carrier 6 sealing elements 17 are provided between the application element 5 and the application element carrier 6.

Fig. 3 shows an application element 5 for an application unit 1, for example one of the application units 1 from Fig. 1, 2. The application element 5 is comprised of individual application sub-elements 18 that are individually mounted via a corresponding fastening means 19 to an application element carrier 6. Of course, it is also possible to provide a common application element 5 that is slotted into individual application segments or application sub-elements 18.

The individual application sub-elements 18 are individually moveable, in particular deflectable, relative to the application element carrier 6, as described before. The sub-elements 18 may individually be changed, e.g. loosened or attached to the application element carrier 6. For example, if one of the application sub-elements 18 is worn, it can individually be exchanged and the other application sub-elements 18 can remain in position. It is also possible that deviations in the build plane 2 that occur only locally are compensated by a relative movement of only one application sub-element 18 instead of deflecting the entire application element 5.

It is further possible that the individual application sub-elements 18 are made from the same or a different material. For example, application sub-elements 18 that are assigned to regions of the build plane 2 in which the wear on the application sub-elements 18 is higher, a different, in particular more rigid material can be used to increase the tool life.

Of course, all details, features and advantages described with respect to the individual embodiments can arbitrarily be exchanged, transferred and combined.

The method may be performed on the apparatus 4 using the application unit 1.

## Claims

1. Apparatus (4) for additively manufacturing three-dimensional objects by means of successive layerwise selective irradiation and consolidation of layers of a build material which can be consolidated by means of an energy source, the apparatus (4) comprising an application unit (1) for applying, in particular powdery, build material in a build plane (2) in a process chamber (3) of the apparatus (4), the application unit (1) comprising: an application element (5) comprising an inclined surface facing an application direction; an application element carrier (6) configured to carry the application element (5); and at least one deflection unit (9) coupling the application element (5) to the application element carrier (6), wherein the deflection unit (9) comprises a spring element, wherein the spring element is built as or comprises a spring and/or an elastically deformable element, wherein the application element (5) is fastened against the application element carrier (6) with the deflection unit (9) acting as intermediate element, **characterized in that** the application element (5) is mounted to the application element carrier (6) via a positive locking connection between the application element (5) and the application element carrier (6), wherein the application element (5) is spring loaded against the application element carrier (6) in the direction of the build plane, and wherein at least one sealing element (17) is disposed between the application element (5) and the application element carrier (6).

2. Apparatus (4) according to claim 1, **characterized in that** the deflection unit (9) is adapted to enable a deflection of the application element (5) relative to the application element carrier (6), preferably for enabling at least one of
- compensating a defect in the build plane (2), in particular a part of the object protruding from the build plane (2) or an unevenness in the build plane (2);
- limiting a force acting on the application element (5);
- reducing wear of the application element (5); or
- avoiding damaging the object.

3. Apparatus (4) according to one of the preceding claims, **characterized in that** the deflection unit (9) is adapted to enable a deflection of the application element (5) for a deflection height (16).

4. Apparatus (4) according to one of the preceding claims, **characterized in that** the application element (5) comprises at least one surface (15) inclined with respect to a build plane (2) and/or the application element carrier (6).

5. Apparatus (4) according to one of the preceding claims, **characterized in that** the application element (5) comprises a hull-shaped cross-section.

6. Apparatus (4) according to one of the preceding claims, **characterized in that** the application element (5) comprises at least one portion built from ceramic and/or steel, preferably steel grades 1.2379 and/or 1.4301 and/or 1.4310, in particular a material related to the build material.

7. Method for operating an apparatus (4) for additively manufacturing three-dimensional objects by means of successive layerwise selective irradiation and consolidation of layers of a build material which can be consolidated by means of an energy source, comprising applying at least one layer of build material via an application unit (1) comprising: an application element (5) comprising an inclined surface facing an application direction; an application element carrier (6) configured to carry the application element (5); and at least one deflection unit (9) coupling the application element (5) to the application element carrier (6), wherein at least one sealing element (17) disposed between the application element (5) and the application element carrier (6), wherein the deflection unit (9) comprises a spring element, wherein the spring element is built as or comprises a spring and/or an elastically deformable element, wherein the application element (5) is fastened against the application element carrier (6) with the deflection unit (9) acting as intermediate element, wherein the application element (5) is mounted to the application element carrier (6) via a positive locking connection between the application element (5) and the application element carrier (6), wherein the application element (5) is spring loaded against the application element carrier (6) in the direction of the build plane.

## Patentansprüche

1. Vorrichtung (4) zur additiven Herstellung dreidimensionaler Objekte mittels sukzessiver schichtweiser selektiver Bestrahlung und Festigung von Schichten eines Baumaterials, die mittels einer Energiequelle konsolidiert werden können, wobei die Vorrichtung (4) eine Auftragseinheit (1) zum Auftragen, insbesondere pulverförmiger, Baumaterialien in einer Bauebene (2) in einer Prozesskammer (3) der Vorrichtung (4) umfasst, wobei die Auftragseinheit (1) umfasst: ein Auftragselement (5), das eine geneigte Oberfläche aufweist, die einer Auftragsrichtung zugewandt ist; einem Anwendungselementträger (6), der so konfiguriert ist, dass er das Anwendungselement (5) trägt; und mindestens eine Umlenkeinheit (9), die das Applikationselement (5) mit dem Applikationselementträger (6) koppelt, wobei die Umlenkeinheit (9) ein Federelement umfasst, wobei das Federelement als ein Federelement und/oder ein elastisch verformbares Element aufgebaut ist oder umfasst, wobei das Applikationselement (5) an dem Applikationselementträger (6) befestigt ist, wobei die Umlenkeinheit (9) als Zwischenelement wirkt, **dadurch gekennzeichnet, dass** das Applikationselement (5) an dem Applikationselementträger (6) über eine formschlüssige Verriegelungsverbindung zwischen dem Applikationselement (5) und dem Applikationselementträger (6) angebracht ist, wobei das Applikationselement (5) in Richtung der Bauebene gegen den Applikationselementträger (6) federbelastet ist und wobei mindestens ein Dichtungselement (17) zwischen dem Applikationselement (5) und dem Applikationselementträger (6) angeordnet ist.

2. Vorrichtung (4) nach Anspruch 1, **dadurch gekennzeichnet, dass** die Umlenkeinheit (9) angepasst ist, um eine Umlenkung des Applikationselements (5) relativ zum Applikationselementträger (6) zu ermöglichen, vorzugsweise zur Ermöglichung von mindestens einem
- Ausgleich eines Defekts in der Bauebene (2), insbesondere eines aus der Bauebene (2) hervorstehenden Teils des Objekts oder einer Unebenheit in der Bauebene (2);
- Begrenzung einer auf das Aufbringungselement wirkenden Kraft (5);
- Verringerung des Verschleißes des Auftragselements (5); oder
- Vermeide es, das Objekt zu beschädigen.

3. Vorrichtung (4) nach einem der vorhergehenden Ansprüche, **dadurch gekennzeichnet, dass** die Ablenkeinheit (9) so angepasst ist, dass eine Ablenkung des Applikationselements (5) für eine Ablenkhöhe (16) ermöglicht wird.

4. Vorrichtung (4) nach einem der vorhergehenden Ansprüche, **dadurch gekennzeichnet, dass** das Anwendungselement (5) mindestens eine gegenüber einer Bauebene (2) und/oder dem Anwendungselementträger (6) geneigte Fläche (15) aufweist.

5. Vorrichtung (4) nach einem der vorhergehenden Ansprüche, **dadurch gekennzeichnet, dass** das Anwendungselement (5) einen rumpfförmigen Querschnitt aufweist.

6. Vorrichtung (4) nach einem der vorhergehenden Ansprüche, **dadurch gekennzeichnet, dass** das Anwendungselement (5) mindestens einen Abschnitt aus Keramik und/oder Stahl, vorzugsweise Stahlsorten 1.2379 und/oder 1.4301 und/oder 1.4310, insbesondere ein mit dem Baumaterial verwandtes Material, aufweist.

7. Verfahren zum Betreiben einer Vorrichtung (4) zum additiven Herstellen dreidimensionaler Objekte mittels sukzessiver schichtweiser selektiver Bestrahlung und Festigung von Schichten eines Baumaterials, die mittels einer Energiequelle konsolidiert werden können, umfassend das Aufbringen von mindestens einer Schicht Baumaterial über eine Anwendungseinheit (1), umfassend: ein Auftragselement (5), das eine geneigte Oberfläche aufweist, die einer Auftragsrichtung zugewandt ist; einem Anwendungselementträger (6), der so konfiguriert ist, dass er das Anwendungselement (5) trägt; und mindestens eine Umlenkeinheit (9), die das Applikationselement (5) mit dem Applikationselementträger (6) koppelt, wobei mindestens ein Dichtelement (17), das zwischen dem Applikationselement (5) und dem Applikationselementträger (6) angeordnet ist, wobei die Umlenkeinheit (9) ein Federelement umfasst, wobei das Federelement als Feder und/oder ein elastisch verformbares Element aufgebaut ist oder umfasst, wobei das Applikationselement (5) an dem Applikationselementträger (6) befestigt ist, wobei die Umlenkeinheit (9) als Zwischenelement wirkt, wobei das Applikationselement (5) über eine positive Verriegelungsverbindung zwischen dem Applikationselement (5) und dem Applikationselementträger (6) an dem Applikationselementträger (6) angebracht ist, wobei das Applikationselement (5) gegen den Applikationselementträger (6) in Richtung der Bauebene gefedert ist.

## Revendications

1. Appareil (4) pour la fabrication additive d'objets tridimensionnels par irradiation sélective successive par couches et consolidation de couches d'un matériau de construction pouvant être consolidées au moyen d'une source d'énergie, l'appareil (4) comprenant une unité d'application (1) pour l'application, notamment en poudre, de matériaux de construction dans un plan de construction (2) dans une chambre de traitement (3) de l'appareil (4), l'unité d'application (1) comprenant: un élément d'application (5) comprenant une surface inclinée orientée vers une direction d'application; un porteur d'élément d'application (6) configuré pour transporter l'élément d'application (5); et au moins une unité de déviation (9) couplant l'élément d'application (5) au support de l'élément d'application (6), dans laquelle l'unité de déviation (9) comprend un élément de ressort, dans lequel l'élément de ressort est construit comme ou comprend un ressort et/ou un élément déformable élastiquement, dans lequel l'élément d'application (5) est fixé contre le support de l'élément d'application (6) avec l'unité de déviation (9) agissant comme élément intermédiaire, **caractérisé en ce que** l'élément d'application (5) est monté sur le support de l'élément d'application (6) via une connexion de verrouillage positive entre l'élément d'application (5) et le support de l'élément d'application (6), dans lequel l'élément d'application (5) est chargé par ressort contre le support de l'élément d'application (6) dans la direction du plan de construction, et dans lequel au moins un élément d'étanchéité (17) est disposé entre l'élément d'application (5) et le support de l'élément d'application (6).

2. Appareil (4) selon la revendication 1, **caractérisé en ce que** l'unité de déviation (9) est adaptée pour permettre une déviation de l'élément d'application (5) par rapport au porteur de l'élément d'application (6), de préférence pour permettre au moins un des éléments suivants:
- compenser un défaut dans le plan de construction (2), en particulier une partie de l'objet dépassant du plan de construction (2) ou une inégalité dans le plan de construction (2);
- limiter une force agissant sur l'élément d'application (5);
- réduire l'usure de l'élément d'application (5); ou
- éviter d'endommager l'objet.

3. Appareil (4) selon l'une des revendications précédentes, **caractérisé en ce que** l'unité de déviation (9) est adaptée pour permettre une déviation de l'élément d'application (5) pour une hauteur de déviation (16).

4. Appareil (4) selon l'une des revendications précédentes, **caractérisé en ce que** l'élément d'application (5) comprend au moins une surface (15) inclinée par rapport à un plan de construction (2) et/ou à l'élément d'application porteur (6).

5. Appareil (4) selon l'une des revendications précédentes, **caractérisé en ce que** l'élément d'application (5) comprend une section transversale en forme de coque.

6. Appareil (4) selon l'une des revendications précédentes, **caractérisé en ce que** l'élément d'application (5) comprend au moins une partie construite à partir de céramique et/ou d'acier, de préférence des nuances d'acier 1.2379 et/ou 1.4301 et/ou 1.4310, en particulier un matériau lié au matériau de construction.

7. Méthode de fonctionnement d'un appareil (4) pour la fabrication additive d'objets tridimensionnels par irradiation sélective successive par couches et consolidation de couches d'un matériau de construction pouvant être consolidées au moyen d'une source d'énergie, comprenant l'application d'au moins une couche de matériau de construction au moyen d'une unité d'application (1) comprenant: un élément d'application (5) comprenant une surface inclinée orientée vers une direction d'application; un porteur d'élément d'application (6) configuré pour transporter l'élément d'application (5); et au moins une unité de déviation (9) couplant l'élément d'application (5) au porte-élément d'application (6), dans laquelle au moins un élément d'étanchéité (17) est disposé entre l'élément d'application (5) et le porte-élément d'application (6), dans laquelle l'unité de déviation (9) comprend un élément de ressort, dans lequel l'élément de ressort est construit comme ou comprend un ressort et/ou un élément déformable élastiquement, dans lequel l'élément d'application (5) est fixé contre le porte-élément d'application (6) avec l'unité de déviation (9) agissant comme élément intermédiaire, dans lequel l'élément d'application (5) est monté sur le porte-élément d'application (6) via une connexion de verrouillage positive entre l'élément d'application (5) et le porte-élément d'application (6), dans laquelle l'élément d'application (5) est chargé contre le porte-élément d'application (6) dans la direction du plan de construction.
